# EUROPEAN PATENT APPLICATION

(11) **EP 3 739 404 A1**
(43) Date of publication of application: **18.11.2020**
(21) Application number: 19174253.5
(22) Date of filing: 14.05.2019
(51) Int. Cl.: G05B 19/05, G05B 23/02

(54) **METHOD AND APPARATUS FOR CONTROLLING A DEVICE AND AUTOMATION AND CONTROL SYSTEM**

(71) Applicant: Siemens Aktiengesellschaft, 80333 München (DE)
(72) Inventor: Falk, Rainer, 85586 Poing (DE); Fries, Steffen, 85598 Baldham (DE)

(57) **Abstract**

A method for protecting a controlled device is proposed, wherein the controlled device is implemented to perform an action as a function of a control signal, the method comprising:
defining reference control data;
monitoring a control signal;
extracting control check data from the control signal;
comparing the extracted control check data with the reference control data for obtaining a comparison result; and
modifying the control signal and/or replacing the control signal by a replacement control signal if the comparison result indicates that the extracted control check data does not comply with the reference control data,
setting the reference control data as a function of time, an operational state of the controlled device, a manufacturing step, external sensor data indicative of a temperature, light, an attack and/or a manipulation of the received control signal.

## Description

This disclosure relates to a method and a computer program product for controlling a device. Further, an apparatus for controlling a device and an automation and control system are disclosed.

In industrial automation and control systems (IACS), e.g. including Internet-of-Things-devices (IoT-devices) a secured data communication between the single devices, e.g. IoT-devices, should be ensured in order to protect the devices against manipulation such as software manipulation due to a successful attack against the IACS. For example, in case of the successful attack against a single device or the IACS, it is possible that the device receives manipulated control data which causes the device to operate in an undesired mode. Also, a vulnerability of the device firmware could be exploited, which also could cause the affected device or another device that receives control data from the affected device to operate in an undesired mode. This may lead to damages to the device, other devices or workpieces and may lead in the worst case to injuries of the operator of the device or other persons caused by the manipulated controlled device.

To avoid such manipulation and to reduce the possibility of a successful attack, the integrity of software/firmware, configuration or other stored data, and of the data communication in the IACS between single devices and/or controllers should be ensured. In particular, integrity requires a correct content of the data, an unmodified state of the data and the detection of a modification of the data. It is one object of the present invention to provide means for improving the security in systems including controlled devices.

According to a first aspect, a method for protecting a controlled device of an automation and control system is proposed, wherein the controlled device is implemented to perform an action on the automation and control system as a function of a control signal provided by a control device. The method comprising the steps:
defining reference control data, the reference control data being indicative of plausible control signal properties;
monitoring a control signal for the controlled device,
extracting control check data from the control signal for the controlled device;
comparing the extracted control check data with the reference control data for obtaining a comparison result; and
modifying the control signal and/or replacing the control signal by a replacement control signal if the comparison result indicates that the extracted control check data does not comply with the reference control data,
setting the reference control data as a function of time, an operational state of the controlled device, an operational state of the control device, an operational state of the automation and control system, a manufacturing step, a production order, external sensor data indicative of a temperature, light, an attack and/or a manipulation of the received control signal.

The controlled device may be an actuator, e.g., a valve, a pump, a heater, a motor. The control signal may be an electrical signal, an optical signal, or a digital control signal, e.g., sent over a field bus. The control device may be an electronic control unit, a programmable logic controller (PLC), or an input-output module connected to a PLC or a SCADA system. Properties of the control signal include the value (e.g., voltage level, current level, phase angle), and/or derived signal properties as first derivation, second derivation, spectral mask, filtered signal components, feature extraction (pattern recognition).

With the above-described method, it is advantageously possible to limit the consequences of an attack on the industrial automation and control system or one of its components, by limiting the impact on a controlled device. Thus, even in case of a successful attack, a reliable operation of the attacked automation and control system may still be ensured and maintained. Therefore, in the case of the successful attack, a potential damage caused by the manipulated control device is avoided.

In detail, the above-described method restricts the consequences of a manipulation in the operation of the control device on the controlled device, in particular, if the control signal for the controlled device is replaced by malware running on the control device or by a manipulated control device hardware. Also, if control data received and/or processed by the control device to generate the control signal should be manipulated, still the possible negative impact on the controlled device is limited.

In particular, a successful attack is detected if the comparison result indicates that the extracted control check data does not comply with the reference control data. In the case of a detection of an attack affecting the controlled device, the control signal for controlling the controlled device is intercepted and is changed (modified) and/or replaced by a replacement control signal. The replacement control signal is indicative of plausible or allowed control data for the controlled device. The replacement control signal may also comprise replacement control data. Then, the controlled device can only operate in an allowed operational range indicated by the replacement control signal. Therefore, the replacement control signal limits the potential damage due to an ill-controlled controlled device if the original control signal of the control device is manipulated. Further, advantageously, even if a manipulation of control data occurs, it is not necessary to completely shut down or stop the operation of the controlled device or the overall automation and control system because the replacement control signal corresponds to control data that allows the controlled device to operate in a restricted or secure fashion.

Furthermore, the reference control data used in the comparison step for comparing the reference data and the extracted control signal check data, may be set or be adjusted during the operation of the controlled device in dependence of environmental influences to the controlled device, the control unit or the automation and control system for controlling the controlled device. The reference control data are therefore changeable or adjustable and determine what types of operation of the controlled device is allowed. This has the advantage that the reference control data can be updated at any time, and therefore it is ensured that the comparison of the extracted control signal check data with the reference control data is always up to date.

Additionally, in other words, the above-described method may be regarded as a firewall for the controlled device, around the controlled device or a plurality of controlled devices. By intercepting manipulated control signal for the controlled device before the manipulated control signal can reach the controlled device and changing and/or replacing the manipulated control signal with replacement control signal, the damage due to the wrongly controlled device because of the manipulated control device or control data is limited or avoided. Thus, the robustness of the controlled device and/or the automation and control system, which includes the at least one controlled device against attacks is improved. This increases the resilience of the automation and control system. Even if the automation and control system is attacked successfully, the impact on the controlled technical, system (physical world) is limited.

Specifically, in systems that do not have data network interfaces but hard-wired signal lines (e.g., electrical or optical wires of field bus) between devices, also a protection against an attack can be implemented with the above-mentioned method, e.g., by using a "Bump-in-the-wire" configuration. In particular, in a "Bump-in-the-wire" configuration a control signal firewall device is inserted into the signal line between two devices to enhance the security protection without altering the endpoints, e.g., the two devices. The device operating according to the proposed method can be a control signal firewall device, and the two devices can include a controlled device and a control device generating control signal.

A controlled device is or comprises specifically an actuator, e.g., a valve, a pump, a heater, a motor, which is integrated in or connected to a control device, an automation and control system, or an IACS. For example, the controlled device comprises an actuator device including at least one moveable element. In particular, the actuator device is an automated machine, a tool device, a valve, a pump, an air conditioning system, a transportation system, a conveyer belt, a driving unit, a motor or another controlled device in which it is possible to replace or change at least a value of a control variable or the control signal for controlling the controlled device by the replacement control signal.

A control device may be an electronic control unit, a programmable logic controller (PLC) or an input-output module connected to a PLC or a Supervisory Control and Data Acquisition (SCADA) system. The control device can also be defined as a control unit.

Preferably, an automation and control system is a system in which at least an operation of at least one controlled device is controlled, monitored and/or automated. In particular, the automation and control system comprises a plurality of controlled devices which are communicating with each other within the automation and control system. For example, the automation and control system is formed as an Industrial Automation and Control System (IACS) and may be controlled by a SCADA-system.

In particular, an action is a prescribed movement of the moveable element or an operation of the controlled device based on the received control signal. For example, if the controlled device is a robot, the action may comprise a prescribed movement of a robot arm of the robot. If the controlled device is a drilling tool machine, the action may include a start or a stop of a drilling of the tool machine.

In particular, properties of the control signal include the value, e.g. a voltage level, a current level and/or a phase angle, and/or derived signal properties as a first derivation, a second derivation, a spectral mask, a filtered signal components and/or feature extraction, e.g. pattern recognition.

Specifically, plausible control signal properties are data values which trigger allowed prescribed movements of the movable element of the controlled device. Reference control data, replacement control data values used to generate the replacement control signal may be set and/or are adjustable during the operation of the controlled device in dependence of environmental influences. The reference control data maybe set as a function of time, an operational state of the controlled device, a manufacturing step, a production order, external sensor data indicative of a temperature, light, an attack and/or a manipulation of the received control signal.

Preferably, in the step of comparing, a comparison is done in order to determine if the extracted control signal check data comply with the plausible reference control data. The comparison result indicates if the extracted control signal check data is within or not within the allowed range of plausible control data properties respectively, values. If the extracted control signal check data comply with plausible reference control data values, the control signal is forwarded to the controlled device without change.

In particular, changing and/or replacing the control signal is done if the extracted control signal check data do not comply with plausible reference control data properties/values. In this case, the control signal is replaced by replacement control signal. Specifically, the replacement control signal is then provided to the controlled device to ensure that the controlled device operates in an allowed operation mode as defined by the replacement control signal.

The attack may be a software attack or a hardware attack. In particular, a software attack may comprise a hacker attack on the control device, control data, or the automation and control system affecting the control signal for the controlled device. For example, a hardware attack is an attack where manipulated hardware such as a manipulated control device with a manipulated circuit board is placed within the control device controlling the controlled device, or within one or more other device of the automation and control system.

A manipulation may be considered a replacement or a change of firmware/software, configuration data, and/or original control data by manipulated data which have another purpose than the original control data, so that the controlled device executes undesired actions or operations which can lead to damages of the controlled device, workpieces, the automation and control system, or operators.

According to embodiments, the controlled device is part of an IACS.

In particular, industrial automation and control systems (IACS) may comprise Internet-of-Things-devices (IoT-devices) in terms of the control device being coupled to the internet. Further, an IACS has servers, control units and other devices which are necessary for controlling and monitoring the controlled device in an automation and control system. In particular, the controlled device is controlled and monitored by the automation and control system such as the IACS or an industrial IoT-system.

According to an embodiment the method further comprises:
at a control device, generating the control signal;
over a signal line, transmitting the control signal from the control device to the controlled device; and
at or within the controlled device or along the signal line, processing the received control signal according to the steps of monitoring, comparing, modifying and/or replacing.

Preferably, the control device is arranged in an automation and control system and transmits the control signal over the signal line to the controlled device.

This has the advantage that the above-described method can be used with each control device in the automation and control system and can be integrated at multiple control devices to ensure that only plausible control signals reach the respective controlled device.

According to a further embodiment, the controlled device comprises an actuator device including at least one moveable element, wherein the control data is indicative of a prescribed movement of the moveable element.

Specifically, a moveable element is at least a joint of a robot arm, a plug in a valve, a moveable element in a pump, a cooler or a fan in an air conditioning system, a movable element in a driving unit, or a shaft in a motor.

The proposed method is in particular useful to limit a potential damage due to undesired movements of movable elements. It is sometimes desired to fulfill specific security requirements if dangerous moveable elements are controlled. The proposed method is in particular suitable for ensuring the secure operation and control of such system.

According to a further embodiment, the reference control data is indicative of a range of the prescribed movement, a velocity, a jerk, an acceleration and/or a deceleration of the moveable element.

The reference control data may be indicative of plausible control signal check data properties/values. Preferably, the plausible reference control data values are indicative of the range of the prescribed movement, the velocity, the jerk, the acceleration and/or the deceleration of the moveable element. Thus, the plausible control data values define data or values for the controlled device in which the moveable element still may be operate. Preferably, if the controlled device is the robot, the range of the prescribed movement may be defined as a three-dimensional space in which the robot is allowed to move and to operate based on the plausible control data values.

According to a further embodiment, the reference control data are set or updated at predetermined times, continuously and/or periodically.

In particular, continuously means that the reference control data are set or updated in fine, continuously clocked cycles. Continuously may also be defined as constantly or steady. In embodiments the reference control data are updated in real time.

Periodically may be understood as setting the reference control data every fixed periodical interval. For example, using a time interval T = 10s, the reference control data is set or updated at t0 = 0s, t1 = 10s, t2 = 20s, t3 = 30s et cetera.

According to a further embodiment, the monitored control signal for controlling the controlled device is an analog electrical signal, an optical signal, or a digital electrical signal.

In particular, in the case if the controlled device is controlled by a digital electrical signal, for example by an Inter integrated circuit (I2C) or a Serial peripheral interface (SPI), the extracted control signal check data of a digital protocol for controlling the controlled device can be monitored in order to examine if the extracted control data are allowed. Specifically, the digital protocol is a field bus protocol, e.g., Modbus, EtherCat, Profibus, Profinet, or CAN-Bus.

According to a further embodiment, at least one controlled device is a robot, an automation machine, a tool machine, a valve, a pump, an air conditioning system, a driving unit, a motor or another controlled device in which it is possible to replace at least a control variable or a control signal for controlling the controlled device by the received control signal or the replacement control data.

By using the above-described method, in case of a successful attack, the replacement control data restrict the prescribed movement of the controlled device so that no undesired action can occur when the controlled device still operates. This improves the security of the controlled device and avoids damage that would be caused by the manipulated controlled device.

For example, if the controlled device is a robot or an industry robot and a manipulation is detected, the movement of the joint of the robot arm is restricted by using replacement control data so that the robot arm cannot operate in an undesired area or perform undesired movements. This improves the security of the controlled device, the area around the controlled device and/or the workpieces which are processed by the controlled device.

For example, if the controlled device is an automated machine and a manipulation is detected, a technical process which is executed by the automated machine can still be continued based on the replacement control data. It is not necessary to stop or shut down an entire production line. This leads to less interruption in the production process.

For example, if the controlled device is the tool machine and a manipulation is detected, an undesired start of a drilling process or drilling with a wrong rate of rotation can be avoided by using replacement control data. Then, the tool machine can be stopped, be operated with the replacement control data or put into a safe state. Therefore, the security of the tool machine is increased.

For example, if the controlled device is the valve and a manipulation is detected, a movement of the plug of the valve may be restricted based on the replacement control data, so that a passing of wrong liquids through the valve can be prevented. This improves the security of the valve and at least a device or a plurality of devices which are supplied by the valve. Further, it is also possible to restrict the movement of the plug of the valve so that the valve does not overreact if manipulated control data are used.

For example, if the controlled device is a pump and a manipulation is detected, the movement of a moveable element in the pump may be restricted due to the replacement control data so that a proper dosage may be ensured. Thus, the security of the pump and at least the device or devices which are supplied by the pump are increased.

For example, if the controlled device is the air conditioning system and a manipulation is detected, the control of the cooling mechanism and/or a fan may be restricted based on the replacement control data so that the temperature cannot leave a predetermined temperature range. Thus, the security of the air conditioning system is improved.

For example, if the controlled device is a driving unit or a motor, the rotation of speed of the shaft of the motor or of the driving unit may be restricted based on the replacement control data so that the shaft may only rotate within a predetermined range defined by the replacement control data. Therefore, the security of the driving unit and/or motor is improved.

According to a further embodiment, comparing comprises:
determining whether the extracted control check data correspond to control values within an allowable range defined by the reference data.

If the extracted control check data indicates an action of the controlled device that is outside an acceptable range, according to the method replacement control signal is provided to the controlled device. Thus, a secure operation is ensured.

According to a further embodiment, the modifying and/or replacing comprises:
ensuring that the replaced or modified control signal is indicative of control data values within an allowable range as defined by the reference data.

Thus, the controlled device only operates within the allowable range which is defined by the reference control data. This has the advantage that the security of the controlled device is increased because the controlled device does not perform an undesired movement outside the allowed range.

According to a further embodiment, the modified control signal and/or the replaced control signal is forwarded to the controlled device.

By forwarding the modified control signal and/or the replaced control signal to the controlled device, the controlled device is only capable to operate within the allowable range which is defined by the reference control data. This has the advantage that the security of the controlled device is increased because the controlled device cannot perform at least an undesired movement.

According to a further embodiment, if the comparison result indicates that the extracted control data does not comply with the reference control data, the comparison result as well as the replacement control signal are logged.

By contrast, in particular, if the comparison result indicates that the extracted control data does comply with the reference control data, the comparison result is logged. Logging the comparison result allows for investigations on manipulation attacks. The unmodified control signal may be provided to the controlled device.

This has the advantage that a user or an operator of the controlled device can always track back the point in time and the extracted control check data values in order to examine why the extracted control data does not comply with the reference control data.

According to a further embodiment, the modified control signal and/or the replaced control signal is forwarded to the controlled device for a limited time or an unlimited time.

In embodiments, the replacement or modify of the control signal is only executed on a predetermined time. In other embodiments the modify or replacement occurs permanently or until a specific reset signal is received at the control device. For example, accidental changes in the extracted control signal can be classified as a manipulation. The safe mode, where modified or replaced control data are forwarded to the controlled device then ends after the predetermined and limited time period. Consequently, a normal mode is resumed.

Preferably, after a predetermined time, if newly extracted control data included in the monitored control signal do comply with the reference control data, the monitored control signal is forwarded to the controlled device without replacements or modifications.

Alternatively, a resetting of the modified control signal and/or the replaced control signal is done in order to forward the control signal without replacements or modifications to the controlled device. The resetting may be implemented by a keystroke or a control command by means of the control unit.

According to a further embodiment, the monitored control signal is forwarded to the controlled device without replacements or changed if the comparison result indicates that the extracted control data does comply with the reference control data.

Hence, if no manipulation is detected, a normal operation mode according to the control data is performed.

According to a second aspect, an apparatus for protecting a controlled device of an automation and control system is proposed, wherein the controlled device is configured to perform an action on the automation and control system as a function of a received control signal. The apparatus comprising:
a monitoring unit configured to monitor a control signal for the controlled device provided by a control device, and to extract control signal check data included in the control signal;
a storage unit configured to store reference control data, wherein the reference control data is indicative of plausible control data properties;
a comparison unit configured to compare the extracted control signal check data with the reference control data for obtaining a comparison result; and
a replacement unit configured to replace or change the control signal by a replacement control signal if the comparison result indicates that the extracted control signal check data does not comply with the reference control data,
wherein the reference control data are set as a function of time, an operational state of the controlled device, a manufacturing step, a production order, external sensor data indicative of a temperature, light, an attack and/or a manipulation of the received control signal.

The reference data may be set by the apparatus autonomously, or it may be set remotely via a configuration interface, in particular over a data communication network. This allows a resilience managing device to set the reference data on one or multiple apparatuses of an automation and control system.

According to a further embodiment, the apparatus is included in the controlled device or the apparatus is external to the controlled device.

In embodiments the controlled device includes a signal validating device as the apparatus implementing the steps according to the proposed method.

Then, the reaction time for detecting an attack and transmitting the replacement control signal to the controlled device is decreased, because the transmission distance for the replacement control data to the controlled device is short. Hence, the replacement control data may be transmitted quickly and reliably to the controlled device. This increases the security of the controlled device.

Alternatively, the apparatus may be external to the controlled device. In particular, the apparatus is arranged at another position compared to the controlled device and is connected via a signal wire with the controlled device. Thus, a flexible implementation within signal cabling paths between a source for the control signal and the controlled device is possible. The signal wire may be an electrical wire, an optical fiber, or a field bus cabling.

The respective unit, e.g., the monitoring unit, may be implemented in hardware and/or in software. If said unit is implemented in hardware, it may be embodied as a device, e.g., as a computer or as a processor or as a part of a system, e.g., a computer system. If said unit is implemented in software, it may be embodied as a computer program product, as a function, as a routine, as a program code, or as an executable object.

According to a further embodiment, the apparatus further comprises a switch, wherein the comparison unit is further configured to actuate the switch in a first position if the comparison result indicates that the extracted control data does not comply with the reference control data, wherein at the first position, the replacement unit is configured to output the replacement control data to the controlled device.

In particular, the switch comprises two different positions. Specifically, the switch is switched in a first position if the comparison result indicates that the extracted control data does not comply with the reference control data. In the first position the switch is connected with the replacement unit. In the first position, the replacement unit is configured to output the replacement control signal to the controlled device. Thus, replacement control signal is provided to the controlled device.

The switch is switched in a second position if the comparison result indicates that the extracted control data does comply with the reference control data. In the second position, the switch is connected with the monitoring unit. In the second position, the monitoring unit is configured to directly output the monitored unmodified control signal to the controlled device.

According to a further embodiment, the apparatus further comprises a control device implemented to operate the apparatus according to the method for controlling as described above or below with respect to the embodiments.

According to a further embodiment of the apparatus, the apparatus further comprises:
at least one sensor device implemented to generate sensor data indicative of a temperature, light, an attack and/or a manipulation of the received control signal; and
a resilience managing device implemented to generate the reference control data, in particular as a function of the sensor data.

In particular, the apparatus provides an interface for connecting an external sensor device and/or an external resilience managing device.

Preferably, the at least one sensor device is a trusted sensor. The trusted sensor may provide sensor data to the apparatus which are indicative of trustworthy control data for the controlled device. For example, the trusted sensor may comprise a secure element, e.g., a crypto controller or a Trusted platform module (TPM) for providing a cryptographically protected sensor measurement value. Specifically, trustworthy control data is data gathered from an automation and control system using tamper-protected sensors. Such trusted control data can be used for cross-checking the control data / control signals used for controlling the controlled device. The advantage by using trusted sensors is that trusted sensors have a protection against tampering and/or software/firmware manipulation by unauthorized third parties like an attacker or hacker and therefore improve the overall security for the controlled device and the monitoring of the controlled device.

According to a further embodiment, the storage unit is further configured to obtain the reference control data from a resilience managing device via a network interface unit over a separated communication network or a local interface unit.

Preferably, the resilience managing device is part of an automation and control system and provides the reference control data. In particular, the resilience managing device provides the reference control data in order to maintain the operation of a technical system, e.g. comprising the controlled device, even if an attack against the controlled device is taking place.

Furthermore, the resilience managing device may be integrated in an IoT-Backend. It may be realized as resilience managing service hosted on an IoT-backend cloud platform device. The automation and control system can comprise a plurality of resilience managing devices each providing different reference control data. It is then an advantage that the reference control data can be updated at every desired time and independently for different controlled devices. The apparatus may support a plurality of reference control data that can be set by different resilience managers. The apparatus may check the extracted control signal check data against the plurality of reference control data.

According to a further embodiment of the apparatus, a data transfer from the resilience managing device to the storage unit is cryptographically secured.

By cryptographically securing the data transfer, the security for data communication, in particular the integrity of the transmitted data, can be increased in order to enable a reliable and secure data transfer from the resilience managing device to the storage unit and/or other devices of units. It can be ensured that the integrity, authenticity, and currentness (being up-to-date) of the transferred reference data is protected. Also, the confidentiality may be protected.

This embodiment has the advantage that the data transfer from the resilience managing device or another device in the automation and control system providing reference control data for the storage unit is cryptographically secured and allows a direct interaction with the control device of an IACS. Alternative, the data transfer may be implemented by means of an authenticated and at least integrity-protected connection such as Transport Layer Security (TLS).

Specifically, the network interface unit is formed as a wireless network interface unit such as a Wireless Local Area Network (WLAN), Worldwide Interoperability for Microwave Access (WiMAX) and/or mobile phone standards such as 4G and/or 5G or a wired network interface unit.

According to a further embodiment, the local interface unit is a universal serial bus or a serial interface unit.

Specifically, the local interface unit can be implemented as a plug or a connector which is directly connectable to the apparatus and/or the storage unit.

In this further embodiment, the reference control data are obtained from at least one security token via the local interface unit.

In particular, the security token is a hardware or software component for identifying and authenticating users or devices. The security token may carry predetermined authentic data such as reference control data. Preferably, the security token is personalized and uniquely assigned to a specific user or device. In this case, only the specific user is allowed to transfer the actual reference control data to the storage unit. Furthermore, the security token may be a unique hardware component or a unique software component, which is protected against manipulation and duplication and/or falsification.

Preferably, this further embodiment has the advantage that for transferring reference control data to the storage unit, the security token may be provided by the local interface unit. Also, this embodiment advantageously may be used in implementations where the apparatus should not be connected to a communication network, a separated communication network or a network.

Also, a plurality of security token may be used. Preferably, at least one security token is cryptographically secured such as, for example, with a digital signature.

According to a third aspect, an automation and control system is proposed. The automation and control system comprises:
an apparatus according to any one of the embodiments of the first and second aspect;
the at least one controlled device;
the at least one control device;
the apparatus arranged between the control device and the controlled device, the apparatus monitoring the control signal provided by the control device, the apparatus providing the unmodified control signal or a modified/replacement control signal to the controlled device depending on the check of the provided control signal; and
a communications network implemented to transmit control and/or sensor data to and from the control device;
wherein the controlled device is a field device, an automated machine, a tool device, a valve, a pump, an air conditioning system, a driving unit, a motor or another controlled device in which it is possible to replace or change at least a control variable or the control signal for controlling the prescribed movement of the moveable element of the actuator device of the controlled device by the replacement control signal.

In particular, the controlled device also comprises a process engineering plant, a machine, in particular a manufacturing, a production or a packaging machine, a robot, a railway system, a traffic engineering system, a power station, an energy network, a drive and/or a conveyor system which is controlled and monitored by an automation and control system such as an IACS or an industrial IoT-system.

According to a further embodiment of the third aspect, the automation and control system comprises a plurality of controlled devices, wherein each controlled device has an associated apparatus according to any one of the embodiments of the first and second aspect for ensuring that the respective controlled device performs the action according to control signal in compliance with the reference control data.

According to a fourth aspect, a computer program product is proposed which comprises program code for executing the above-described method according to the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Any embodiment of the first aspect may be combined with any embodiment of the first aspect to obtain another embodiment of the first aspect.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a flow chart illustrating steps of a method for controlling a device according to an embodiment;
- Fig. 2: shows a block diagram of an apparatus for controlling a device according to an embodiment;
- Fig. 3: shows a block diagram of an automation and control system according to a first embodiment comprising the apparatus according to Fig. 2 and a controlled device; and
- Fig. 4: hows a block diagram of an automation and control system according to a second embodiment comprising a plurality of apparatuses according to Fig. 2 and a plurality of controlled devices.

In the Figures, like reference numerals designate like or functionally equivalent elements, unless otherwise indicated.

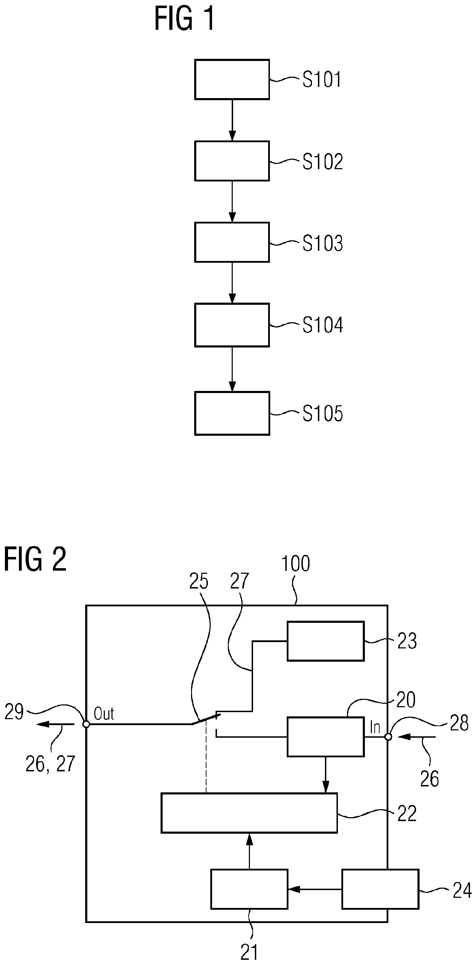

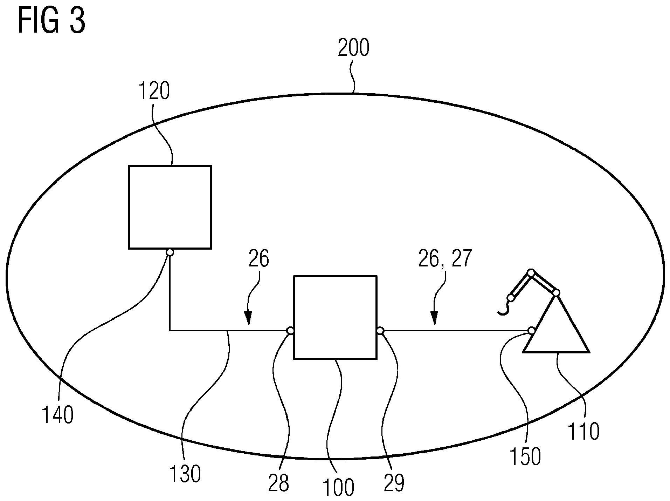

Next, by referring to Figs. 1, 2, and 3, the operation of an apparatus 100 (implemented as a signal validating device, filtering a control signal) is described. This includes a control process as illustrated in Fig. 1 that can be embodied by the signal validating device 100 as part of the automation and control system 200 shown in Fig. 3.

In Fig. 3, a block diagram of an automation and control system 200 according to a first embodiment is shown. The automation and control system 200 comprises a control device 120, a firewall-like device 100, and a controlled device 110.

An output 140 of the control unit 120 (control device), which is configured to generate a control signal, is connected via a cabling 130 to an input 28 of the apparatus 100. By means of the cabling 130, a control signal 26 for controlling the controlled device 110 is transmitted to the input 28 of the apparatus 100. The control signal 26 or replacement control signal 27 is forwarded from an output 29 of the apparatus 100 to an input 150 of the controlled device 110. The controlled device 110 is implemented to perform an action as a function of the received control signal 26 or the replacement control signal 27.

The controlled device 110 in Fig. 3 is a robot, which has at least two robot arms which can be regarded as movable elements. The two robot arms of the robot 110 are controlled so that they are configured to perform an action as a function of the at the input 150 of the robot 110 received control signal 26 or the replacement control signal 27. The action may comprise a prescribed movement of at least one of the robot arms.

Further, as another example which is not shown in the Figures, the controlled device 110 may be a valve comprising a plug. Based on the received control signal 26 or the replacement control signal 27, which is received at the input 150 of the valve 110, the valve 110 is configured to perform a movement of the plug in order to control the amount of liquid which can flow through the valve 110.

In addition, the apparatus 100 in Figs. 2 and 3 may be regarded as a signal validating device 100 for the controlled device 110. The signal validating device 100 is configured to monitor the control signal 26 which is received at the input 28 of the signal validating device 100 from the control unit 120. It analyzes the received control signal 26 and checks whether it is allowed depending on a "filter policy", i.e., the stored reference data. Depending on the check, either the unmodified signal is provided to the controlled device 110, or the replacement signal 27. In contrast to a firewall for a data communication network, a control signal cannot be simply blocked.

Then, the signal validating device 100 is further configured to examine whether the received control signal 26 is valid. This allows to detect a manipulated control signal. If the received control signal 26 is not valid, the signal validating device 100 modifies and/or replaces the received control signal 26 by replacement control signal 27. The replacement control signal 27 is then outputted at the output 29 of the signal validating device 100 and then transmitted to the input 150 of the controlled device 110. Therefore, the signal validating device 100 is configured to intercept manipulated control signal for the controlled device 110 before the manipulated control signal can reach the controlled device 110.

Fig. 1 shows a flow chart illustrating steps of a method for controlling the controlled device 110 at least partly by the signal validating device 100.

The apparatus 100 in Fig. 2 comprises the following parts: a monitoring unit 20, a storage unit 21, a comparison unit 22, a replacement unit 23, a network interface unit 24, and a switch 25. The elements cooperatively execute the steps shown in Fig. 1, i.e., steps S101 to S105.

In Fig. 2, the storage unit 21 is configured to store reference control data, wherein the reference control data is indicative of plausible control data properties, e.g., values and further statistical properties. In this embodiment, the reference control data are set as a function of time, in particular the reference control data are set or updated at predetermined times, continuously, and/or periodically.

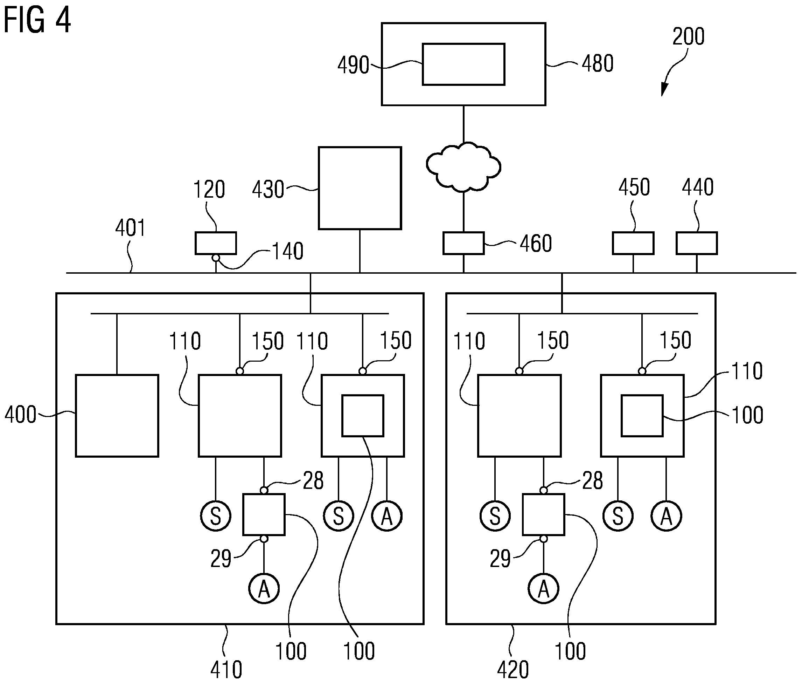

Referring to Fig. 1, in the first step S101, the reference control data in the storage unit 21 which is further configured to obtain the reference control data from a resilience managing device 400, 430, 490 (illustrated in the embodiment of Fig. 4) via the network interface unit 24. The monitoring unit 20 is configured to monitor the control signal 26 for the controlled device 110 which is received at the input 28 of the apparatus 100. Further, the monitoring unit 20 is configured to extract control signal check data from the received control signal 26. Hence, according to step S102, the control signal 26 for the controlled device 110 is monitored by the monitoring unit 20 in the signal validating device 100. Moreover, in step S103 in Fig. 1, control data indicative by the control signal 26 for the controlled device 110 are extracted and fed to the comparison unit 22.

The comparison unit 22 of Fig. 2 receives the extracted control signal check data from the monitoring unit 20 and the reference control data from the storage unit 21. In step S104, the extracted control signal check data are compared with the reference control data for obtaining a comparison result in the comparison unit 22.

The comparison unit 22 is further configured to switch the switch 25 in a first position if the comparison result indicates that the extracted control data do not comply with the reference control data.

In the first position of the switch 25, the replacement control data 27 from the replacement unit 23 are coupled to the output 29 of the apparatus 100. This corresponds to the step S105 in Fig. 1 where the control signal 26 is changed and/or the control signal 26 is replaced by the replacement control data 27. Then, the changed control signal 27 and/or the replaced control signal 27 is forwarded to the controlled device 110. Hence, the controlled device 110 will operate according to the changed control signal 27, thereby ensuring that no undesired actions are performed by the device 110.

The switch 25 in Fig. 2 can also be controlled into a second position if the comparison result indicates that the extracted control signal check data does comply with the reference control data. Hence, no manipulation or inaccuracy in the control data 26 is detected. In this case, the monitoring unit 20 outputs the received control signal 26 via the switch 25 to the output 29 of the apparatus 100. Thus, the original control signal 26 is forwarded to the input 150 of the controlled device 110.

Fig. 4 shows a block diagram of an automation and control system 200 according to a second embodiment. The automation and control system 200 comprises a plurality of sensor devices S, a plurality of actuator devices A, a plurality of controlled devices 110, a plurality of signal validating devices 100, arranged in a first control zone 410, a second control zone 420, a resilience managing device 400, plant resilience managing devices 430, 490, a log-server 440, a configuration-server 450, an IoT-gateway 460, a control device 120, and an IoT-backend 480.

The controlled devices 110 in Fig. 4 may comprise an actuator device A including at least one moveable element. The motion of the movable element is controlled according to control data received by the respective device 110. One of the controlled devices is a robot 110, as described in Fig. 3, the received control data 26 is indicative of a prescribed movement. For example, the control unit 120 issues control data defining a maximum or a minimum velocity of the prescribed movement the robot arms. Further, the control data may indicate in which direction and with which velocity at least one robot arm should move. The devices are communicatively coupled to one another through an industrial network 401.

In addition, a controlled device 110 of the plurality of controlled devices 110 comprises the sensor device S. In the automation and control system 200, at least for the controlled device 110, the sensor device S generates sensor data indicative of a manipulation of the control signal 26 for another controlled device in the system (see Fig. 3).

Moreover, in Fig. 4 a plurality of resilience managing devices 400, 430, 490 is shown.

In Fig. 4, the first control zone 410 and the second control zone 420 are shown. Each of the control zones 410, 420 is a separated zone in which a plurality of devices, e.g., a controlled device 110 and a firewall-like device 100 are arranged with an associated control unit 120. The control unit 120 comprises different control settings for each of the control zones 410, 420. The distinct control zones 410, 420 are communicatively separated from another. The data communication from the control unit 120 to each control zone 410, 420 is separately secured for each control zone 410, 420.

For example, in the first control zone 410 for controlling a plurality of controlled devices 110 by means of the control unit 120, the zone resilience managing device 400 is arranged. From this zone resilience managing device 400, the plurality of apparatuses 100, in particular the storage unit 21 of each apparatus 100, obtains the reference control data from the zone resilience managing device 400. Likewise, in the second control zone 420 for controlling a plurality of controlled devices 110 by means of the control unit 120, the apparatuses 100, especially the storage unit 21 of each apparatus 100 of the second control zone 420, obtains their reference control data from one of the plant resilience managing devices 430, 490.

Thus, each resilience managing device 400, 430, 490 is configured to generate the reference control data, in particular as a function of particular sensor data. The sensor data may indicate an operational state of a respective zone 410, 420. Any data transfer from each resilience managing device 400, 430, 490 to a storage unit 21 of each apparatus 100 is cryptographically secured. This ensures that the reference control data, which are used to determine whether a manipulation of the received control signal 26 at a signal validating device 100 is present, are transmitted to the storage unit 21 of the signal validating device 100 without manipulations. The plant resilience managing device 490 is a part of the IoT-backend 480 and is connected via the IoT-gateway 460 to the control unit 120 and the devices of the automation and control system 200.

The control unit 120 in Fig. 4 is a "supervisory control and data acquisition-system" (SCADA-system) for controlling and monitoring the devices, e.g. the controlled devices 110, the apparatuses 100, the resilience managing devices 400, 430, 490 and the other devices of the automation and control system 200 which are shown in Fig. 4.

According to another embodiment, which is not shown in Fig. 4, an external signal validating device 100 - independent of the first and the second control zone 410, 420 - can be associated to the respective controlled device. In particular, if the signal validating device 100 is external to the controlled device 110 and arranged at another position compared to the controlled device 110, the control signal monitoring can be implemented in the field-level control signal wiring 130 (shown in Fig. 3).

In Fig. 4, the log-server 440 is configured to log and store events of the automation and control system 200, e.g., events comprise whether a manipulation of the control signal 26 has occurred or not, whether the control signal 26 is changed and/or replaced by replacement control data, movements of single controlled devices, comparison results obtained from the apparatuses 100. Further, the configuration-server 450 is configured to configure the above-mentioned devices of the automation and control system 200 shown in Fig. 4.

In the presented methods and apparatuses for controlling a controlled device, the reference data used to detect a manipulation of control data, in particular, depend on the operational state of the controlled device, observable parameters in the system, time and/or other external stimuli. Hence, a flexible signal validating functionality is obtained that can be adapted to changing environments or different manipulative approaches. Overall, the security and reliability of automated systems can be improved.

## Claims

1. A method for protecting a controlled device (110) of an automation and control system (200), wherein the controlled device (110) is implemented to perform an action on the automation and control system (200) as a function of a control signal (26) provided by a control device (120), the method comprising:
defining (S101) reference control data, the reference control data being indicative of plausible control signal properties;
monitoring (S102) a control signal (26) for the controlled device (110),
extracting (S103) control check data from the control signal (26) for the controlled device (110);
comparing (S104) the extracted control check data with the reference control data for obtaining a comparison result; and
modifying (S105) the control signal (26) and/or replacing (S105) the control signal (26) by a replacement control signal (27) if the comparison result indicates that the extracted control check data does not comply with the reference control data,
setting the reference control data as a function of time, an operational state of the controlled device (110), an operational state of the control device (120), an operational state of the automation and control system (200), a manufacturing step, a production order, external sensor data indicative of a temperature, light, an attack and/or a manipulation of the received control signal (26).

2. The method of claim 1, further comprising:
at the control device (120), generating the control signal;
over a signal line (130), transmitting the control signal from the control device (120) to the controlled device (110); and
at or within the controlled device (110) or along the signal line (130), processing the received control data (26) according to the steps of monitoring, comparing, changing and/or replacing.

3. The method of claim 1 or 2,
wherein the controlled device (110) comprises an actuator device (A) including at least one moveable element, wherein the control data is indicative of a prescribed movement of the moveable element.

4. The method of claim 3,
wherein the reference control data is indicative of a range of the prescribed movement, a velocity, a jerk, an acceleration and/or a deceleration of the moveable element.

5. The method of any one of claims 1 - 4,
wherein the reference control data are set or updated at predetermined times, continuously and/or periodically.

6. The method of any one of claims 1 - 5,
wherein comparing comprises:
determining whether the extracted control check data correspond to control values within an allowable range defined by the reference data.

7. The method of any one of claims 1 - 6,
wherein changing and/or replacing comprises:
ensuring that the replaced or changed control signal (27) is indicative of control data values within an allowable range as defined by the reference data.

8. The method of any one of claims 1 - 7, further comprising:
forwarding the changed control signal (27) and/or the replaced control signal (27) to the controlled device (110).

9. An apparatus (100) for protecting a controlled device (110) of an automation and control system (200), wherein the controlled device (110) is configured to perform an action on automation and control system (200) as a function of a received control signal (26), the apparatus (100) comprising:
a monitoring unit (20) configured to monitor a control signal (26) for the controlled device (110) provided by a control device (120), and to extract control check data included in the control signal (26);
a storage unit (21) configured to store reference control data, wherein the reference control data is indicative of plausible control signal properties;
a comparison unit (22) configured to compare the extracted control check data with the reference control data for obtaining a comparison result; and
a replacement unit (23) configured to replace or modify the control signal (26) by a replacement control signal (27) if the comparison result indicates that the extracted control check data does not comply with the reference control data,
wherein the reference control data are set as a function of time, an operational state of the controlled device (110), an operational state of the control device (120), an operational state of the automation and control system (200), a manufacturing step, a production order, external sensor data indicative of a temperature, light, an attack and/or a manipulation of the received control signal (26).

10. The apparatus of claim 9,
further comprising a control device (120) implemented to operate the apparatus (100) according to a method of any one of claims 1 - 8.

11. The apparatus of claim 9 or 10, further comprising:
at least one sensor device (S) implemented to generate sensor data indicative of a temperature, light, an attack and/or a manipulation of the received control signal (26); and
a resilience managing device (400, 430, 490) implemented to generate the reference control data, in particular as a function of the sensor data.

12. The apparatus of claim 11,
wherein a data transfer from the resilience managing device (400, 430, 490) to the storage unit (21) is cryptographically secured.

13. An automation and control system (200) comprising:
an apparatus (100) of any one of claims 1 - 12;
the at least one controlled device (110);
the at least one control device (120); and
the apparatus (100) arranged between the control device (120) and the controlled device (110), the apparatus (100) monitoring the control signal (26) provided by the control device (120), the apparatus (100) providing the unmodified control signal or a modified/replacement control signal (27) to the controlled device (110) depending on the check of the provided control signal (26);
a communications network implemented to transmit control and/or sensor data to and from the control device (110);
wherein the controlled device (110) is a field device, an automated machine, a tool device, a valve, a pump, an air conditioning system, a driving unit, a motor or another controlled device in which it is possible to replace or change at least a control variable or the control signal for controlling the prescribed movement of the moveable element of the actuator device (A) of the controlled device (110) by the replacement control signal (27).

14. The automation and control system of claim 13,
comprising a plurality of controlled devices (110), wherein each controlled device (110) has an associated apparatus (100) of any one of claims 1 - 12 for ensuring that the respective controlled device (110) performs the action according to control data in compliance with the reference control data.

15. A computer program product comprising program code for executing the method of any one of claims 1 - 8 when run on at least one computer.
